# EUROPEAN PATENT APPLICATION

(11) **EP 4 741 615 A1**
(43) Date of publication of application: **13.05.2026**
(21) Application number: 24211277.9
(22) Date of filing: 06.11.2024
(51) Int. Cl.: E05F 11/48, B60J 5/04, E05F 15/689

(54) **WINDOW REGULATOR ASSEMBLY OF A VEHICLE**

(71) Applicant: Hi-Lex Europe GmbH, 97424 Schweinfurt (DE)
(72) Inventor: Matsushita, Masayuki, 97421 Schweinfurt (DE)
(74) Representative: Gosdin, Carstensen & Partner Patentanwälte Partnerschaftgesellschaft mbB

(57) **Abstract**

The invention relates to a window regulator assembly (1) of a vehicle, wherein the window regulator assembly comprises a carrier element (2), wherein the carrier element (2) has a substantial plate-shaped design with a normal direction (N), wherein at least one unit (3) is arranged on the carrier element (2), wherein the unit (3) comprises a guide rail (4), a slider (5) which is movably arranged at the guide rail (4) along a longitudinal axis (L) and at least one pulley arrangement (6) for redirecting a cable (7), wherein the carrier element (2) has an edge region (8) and wherein a part of the unit (3) extends beyond the carrier element (2) in a direction (E) perpendicular to the normal direction (N). To allow an easier and more cost effective design for the provision of an efficient sealing of the carrier element, the invention proposes that the unit (3) comprises a first section (9) which does not extend beyond the carrier element (2) in the direction (E) perpendicular to the normal direction (N) and comprises a second section (10) which extends in the mounted state beyond the carrier element (2) in the direction (E) perpendicular to the normal direction (N), wherein the second section (10) is detachably arranged at the carrier element (2) and at the first section (9). Furthermore, the invention relates to a method for mounting such a window regulator assembly.

## Description

The invention relates to a window regulator assembly of a vehicle, wherein the window regulator assembly comprises a carrier element, wherein the carrier element has a substantial plate-shaped design with a normal direction, wherein at least one unit is arranged on the carrier element, wherein the unit comprises a guide rail, a slider which is movably arranged at the guide rail along a longitudinal axis and at least one pulley arrangement for redirecting a cable, wherein the carrier element has an edge region and wherein a part of the unit extends beyond the carrier element in a direction perpendicular to the normal direction. Furthermore, the invention relates to a method for mounting such a window regulator assembly.

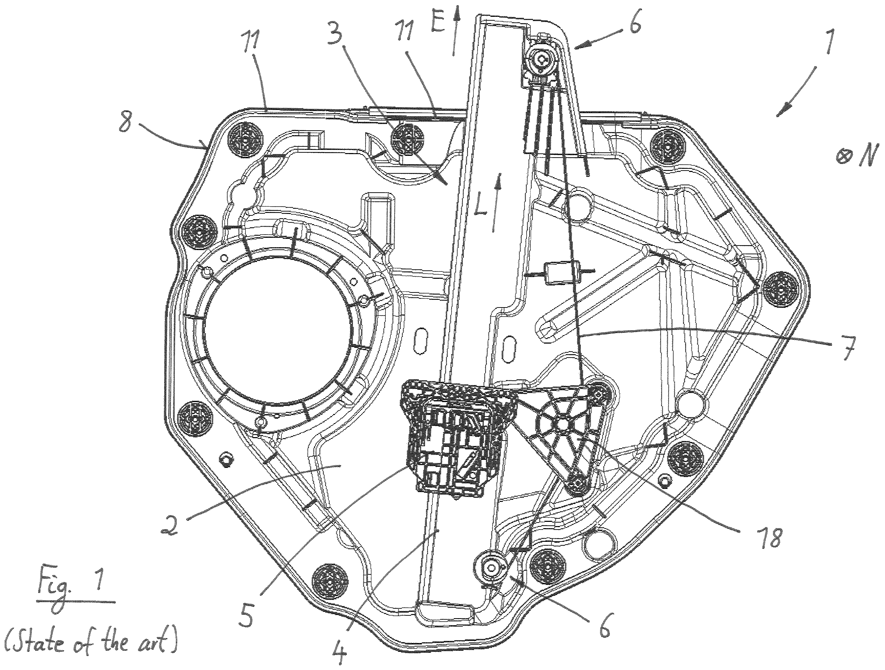

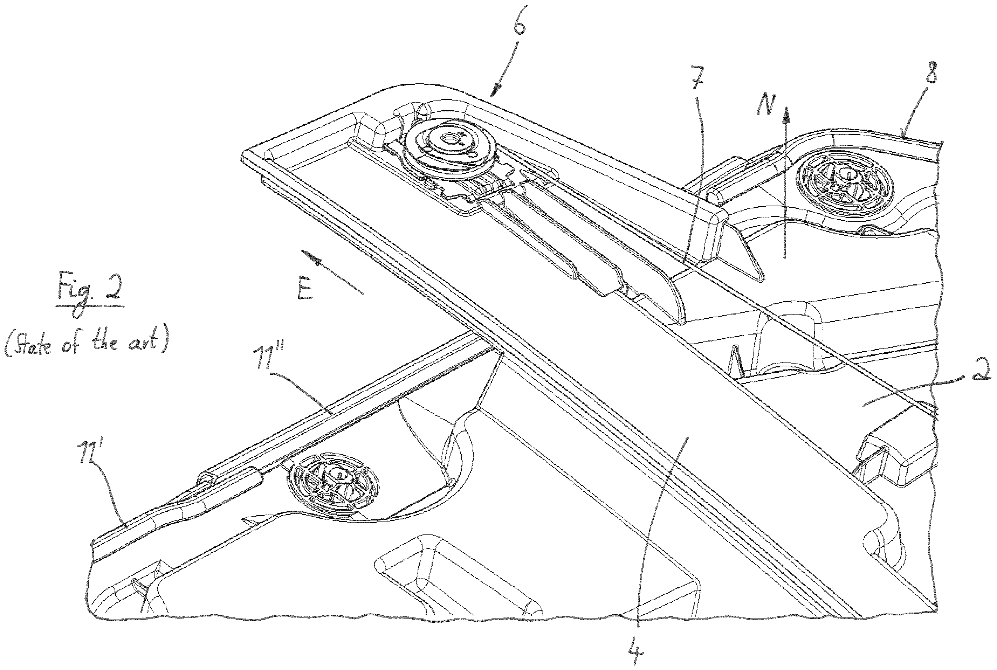

A window regulator assembly of the generic type is known from EP 4 269 737 At**.** Such an arrangement is used in a vehicle door. The principle of this design is shown in figures 1 and 2. Figure 1 shows a top view of a previously known window regulator assembly 1; figure 2 shows a perspective view of a part of the window regulator assembly.

The window regulator assembly 1 has a carrier element 2 which has substantially a plate-like design. The normal direction N stands perpendicular on the base plane of the carrier element 2 and thus normal on the drawing plane of figure 1. A unit 3 is arranged on the carrier element 2. This can be at least partially a separate part 3 which is mounted on the carrier element 2; it is also possible that the unit 3 is formed at least partially from the material of the carrier element 2 by a forming process (e. g. deep drawing).

The unit 3 comprises a guide rail 4 on which a slider 5 can move in a longitudinal direction L. For the movement of the slider 5 pulley arrangements 6 are employed; a cable 7 is guided around the pulleys of the pully arrangements 6. The cable 7 is driven by a drive unit 18. Thus, each of the pulley arrangements 6 has a pulley which is rotatably mounted in order to guide and redirect a cable; the movement of the slider 5 is initiated by the cable 7. The slider 5 includes a window clamp arrangement (not shown) which is engaged with the window of the vehicle.

As can be seen in figure 1 and in figure 2, the unit 3 extends beyond the edge region 8 of the carrier element 2 in a direction E which is perpendicular to the normal direction N; this direction E corresponds substantially to the longitudinal direction L in which the slider 5 moves.

For an adequate operation, it is necessary that the window regulator assembly 1 is provided with a seal 11 before the assembly is mounted at a vehicle door. Normally, most of the circumference of the carrier element 2 is provided with a FIPG seal (Formed-In-Place-Gasket). Due to the extension of the unit 3 beyond the edge region 8 of the carrier element 2, the application of such a seal is often not possible around the whole circumference of the carrier element 2. Accordingly, as shown in figures 1 and 2 (see especially figure 2) the necessary seal 11 is designed as a FIPG seal 11' which covers most of the circumference of the carrier element 2 and a separate seal 11" which is employed to seal the region of the edge of the carrier element where the extended part of the unit is arranged.

The drawback of this design is that the installation of the seal 11 is quite complicated and costly. Extra costs are caused due to the required separate seal in addition to the FIPG seal and the assembly process of the seal. Also, special machines are required to provide the seal in an automated process.

The invention is therefore based on the object of designing a generic window regulator assembly in such a way that an easier and more cost effective design is provided which allows an efficient sealing of the carrier element in a cheap manner. So, the production costs for the window regulator assembly should become lower. Thus, the provision of an effective and cheap sealing element around the whole circumference of the carrier element should be possible.

The solution of this problem by the invention is characterized in that the unit comprises a first section which does not extend beyond the carrier element in the direction perpendicular to the normal direction and comprises a second section which extends in the mounted state beyond the carrier element in the direction perpendicular to the normal direction, wherein the second section is detachably arranged at the carrier element and/or at the first section.

Thus, the proposed solution provides the possibility that the complete seal is arranged at the carrier element before the second section of the unit is mounted. So, the seal can be applied around the whole circumference of the carrier element in an easy and cost effective manner, before the second section of the unit is mounted.

The direction perpendicular to the normal direction is preferably the longitudinal direction in which the guide rail extends.

The first section of the unit ends preferably with a distance before reaching the edge region of the carrier element. The distance is preferably between 0,5 cm and 15,0 cm, specifically between 1,0 cm and 10,0 cm.

A seal is preferably arranged in the edge region of the carrier element which extends continuously along the whole circumference of the carrier element; the seal is preferably a FIPG seal (Formed-In-Place-Gasket) or a 2K over-molded seal (two-component over-molded seal).

The guide rail can be an integrated part of the first section and of the second section of the unit, wherein a first part of the guide rail is formed in the first section of the unit and a second part of the guide rail is formed in the second section of the unit.

An alternative embodiment proposes that the guide rail is a separate part which is connected to the first section and to the second section of the unit.

One single pulley arrangement can be arranged on the second section of the unit.

For the fixation of the second section of the unit at the first section of the unit and at the carrier element respectively, several preferred solutions are provided.

Preferably, form-fit elements can be are arranged at the first section and at the second section of the unit for the alignment and/or connection of the second section relatively to the first section. In this case form-fit elements can comprise first hooks arranged at the first section or at the carrier element and second hooks arranged at the second section, wherein the first hooks can be brought in engagement with the second hooks.

For the fixation of the second section of the unit at the first section or at the carrier element respectively different designs are proposed:
The second section of the unit can be connected to the first section of the unit and/or to the carrier element by means of a snap-fit connection.

The second section of the unit can be connected to the first section of the unit and/or to the carrier element by means of a screw connection.

Finally, the second section of the unit can be connected to the first section of the unit and/or to the carrier element by means of a rivet connection.

The method for mounting of a window regulator assembly of a vehicle, wherein the window regulator assembly comprises a carrier element, wherein the carrier element has a substantial plate-shaped design with a normal direction, wherein at least one unit is arranged on the carrier element, wherein the unit comprises a guide rail, a slider which is movably arranged at the guide rail along a longitudinal axis and at least one pulley arrangement for redirecting a cable, wherein the carrier element has an edge region, wherein a part of the unit extends beyond the carrier element in a direction perpendicular to the normal direction and wherein a seal is arranged at the circumference of the carrier element, is characterized in that the unit comprises a first section which does not extend beyond the carrier element in the direction perpendicular to the normal direction and comprises a second section which extends in the mounted state beyond the carrier element in the direction perpendicular to the normal direction, wherein the first section and the second section are separate parts, wherein the method comprises the steps:
a) mounting of the first section on the carrier element or forming the first section on the carrier element;
b) mounting or applying the seal at the circumference of the carrier element;
c) mounting of the second section on the carrier element and/or on the first section.

By the proposed concept the arrangement of the seal in the extended region of the unit (i. e. where the unit extends beyond the edge region of the carrier element, that is under the "overhang" part of the unit) becomes easier and thus more cost efficient. Additional costs for the two distinct sealing elements (see figures 1 and 2: FIPG seal 11' and separate seal 11") can be avoided. Thus, the use of the pre-known separate seal can be completely avoided, as the complete seal is arranged at the carrier element without special machines in an easy process. For this purpose the seal is applied when the second section of the unit is not yet mounted. Only when the complete circumference of the carrier element is provided with the seal, the second section of the unit is mounted.

The first section of the unit can be at least partially a separate part which is mounted on the carrier element. It is also possible that the first section of the unit is formed at least partially from the material of the carrier element by a deforming process (e. g. by a deep drawing process).

While a single unit can be arranged on the carrier element ("Single Rail" design), in many cases also two of the units are arranged on the carrier element for the due movement of a vehicle window ("Dual Rail" design).

While a FIPG seal is preferred for the proposed concept, also a two component seal (2K over-molded seal, which is known in the prior art) is also beneficial.

The carrier element can be made of plastic material.

The drawings show examples of embodiments of the invention.
- Fig. 1: shows a top plan view of a window regulator assembly according to the state of the art,
- Fig. 2: shows a perspective view of a part of the window regulator assembly according to figure 1,
- Fig. 3: shows a top plan view of a window regulator assembly according to the invention, wherein a second section of the unit is not yet mounted,
- Fig. 4: shows a top plan view of a window regulator assembly to the invention, wherein now the second section of the unit is mounted,
- Fig. 5: shows an exploding view of a part of the window regulator assembly according to figure 4,
- Fig. 6: shows a perspective view of the window regulator assembly according to figure 4,
- Fig. 7: shows a perspective view of a part of the window regulator assembly according to figure 4,
- Fig. 8: shows a perspective view of a part of the window regulator assembly according to figure 4, seen from another perspective and according to a first embodiment of the guide rail,
- Fig. 9: shows a perspective view of a part of the window regulator assembly according to figure 8 and according to a second embodiment of the guide rail,
- Fig. 10: shows a perspective view of a part of the window regulator assembly according to figure 4 and according to a first embodiment of the fixation of the second section of the unit,
- Fig. 11: shows a perspective view of a part of the window regulator assembly according to figure 4 and according to a second embodiment of the fixation of the second section of the unit,
- Fig. 12: shows a perspective view of a part of the window regulator assembly according to figure 4 and according to a third embodiment of the fixation of the second section of the unit,
- Fig. 13: shows a perspective view of a FIPG seal and
- Fig. 14: shows a perspective view of a 2K over-molded seal.

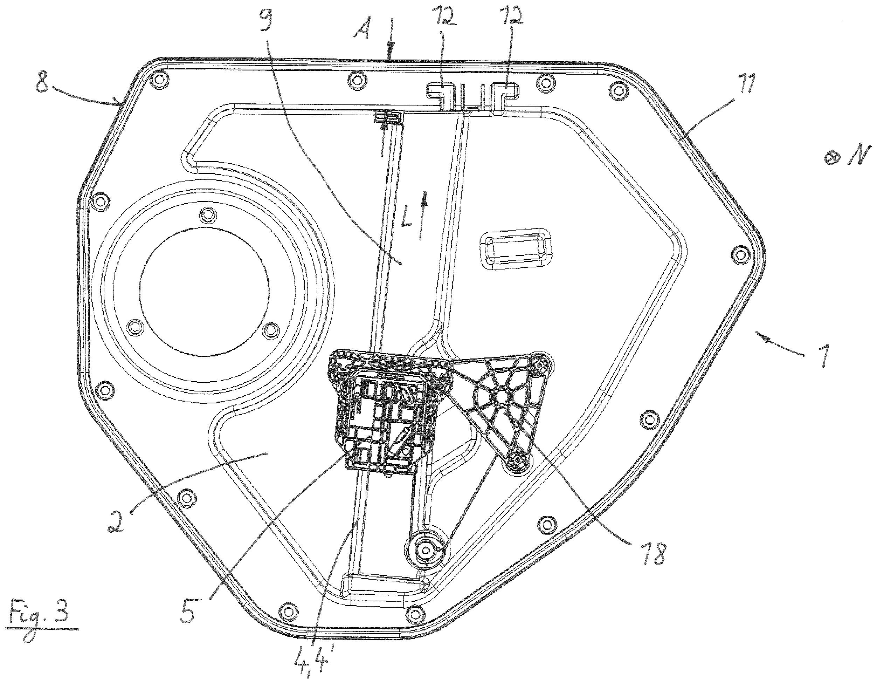

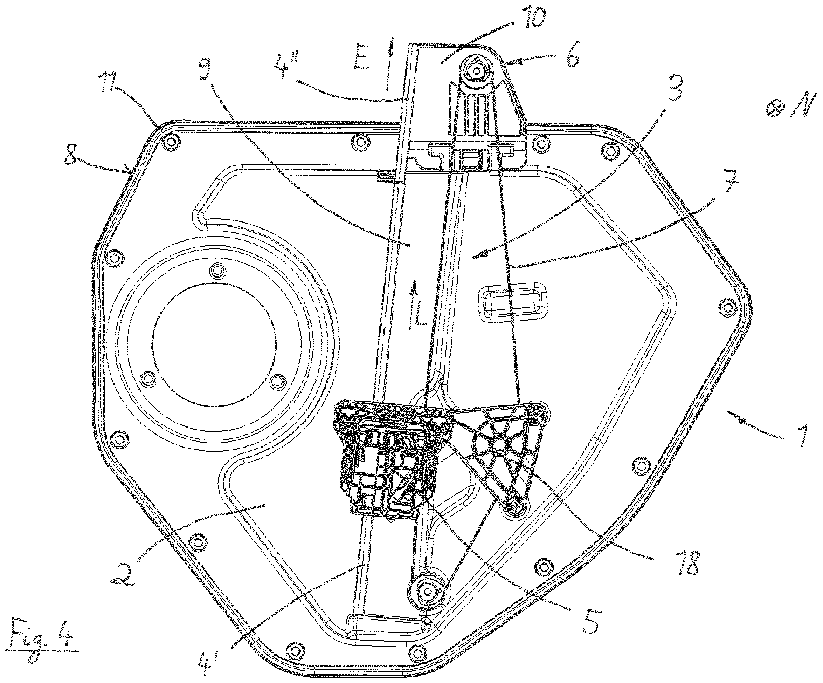

In Figures 3 and 4, a window regulator assembly 1 according to the invention is shown. It has a carrier element 2 (module plate) which has a substantial plate-shaped design. A normal direction N can be defined which stands substantially perpendicular on the base plane of the carrier element 2; the normal direction N is perpendicular to the drawing plane in figures 3 and 4.

On the carrier element 2 a unit 3 is arranged. In the shown embodiment of the invention one single unit 3 is arranged on the carrier element 2 ("Single Rail" design). The unit 3 comprises a guide rail 4, a slider 5 which is movably arranged at the guide rail 4 along a longitudinal axis L and at least one pulley arrangement 6 for redirecting a cable 7.

It should be noted that the guide rail 4 can be a separate part which is fixed on the carrier element 2. It is also possible that the guide rail 4 (or at least a part of the same) is formed from the material of the carrier element 2.

On the guide rail 4 the slider 5 (window carrier) is arranged which is connected with the cable 7. The cable 7 is driven by a drive unit 18. The slider 5 is movably arranged on the guide rail 4 and caused to travel up and down along the guide rail 4 in the longitudinal direction L. In addition, the slider 5 includes a window clamp arrangement (not shown) which is engaged with the window. The slider 5 is attached or connected to the cable 7. Such attachments or connection may be made by clamps, fasteners, adhesives, press fitting, snap fittings, or any other means.

For guiding the cable 7 pulley arrangements 6 are mounted which have a pulley for redirecting the cable 7 as known as such in the prior art.

The carrier element 2 has an edge region 8. As can be seen in figure 4, a part of the unit 3 extends beyond the carrier element 2 in a direction E perpendicular to the normal direction N.

The edge region 8 has to be provided with a seal 11. Beneficially, the seal 11 surrounds the circumference of the carrier element 2 completely as depicted in figures 3 and 4. Here, a FIPG seal is applied to the carrier element 2.

To allow an easy and cost efficient application of the seal 11, it is provided that the unit 3 comprises a first section 9 which does not extend beyond the carrier element 2 in the direction E (i. e. perpendicular to the normal direction N) and comprises a second section 10 which extends in the mounted state beyond the carrier element 2 in the direction E. In figure 3 the second section 10 is not yet mounted; in figure 4 it is mounted. That is, the second section 10 is detachably arranged at the carrier element 2 and at the first section 9 of the unit 3 respectively.

Because the second section 10 is detachably from the first section 9 and the carrier element 2 respectively, it becomes possible in an easy manner to apply the seal 11 around the complete circumference of the carrier element 2 when the second section 10 is not yet mounted (i. e. in the state as shown in figure 3). When the seal 11 is applied to the carrier element 2, the second section 10 is mounted to the first section 9 and the carrier element 2 respectively, as shown in figure 4.

In figure 3 it can be seen that the first section 9 of the unit 3 ends with a distance A from the edge region 8 of the carrier element 2. This provides an easy application of the seal 11 to the carrier element 2 when the second section 10 of the unit 3 is not yet mounted.

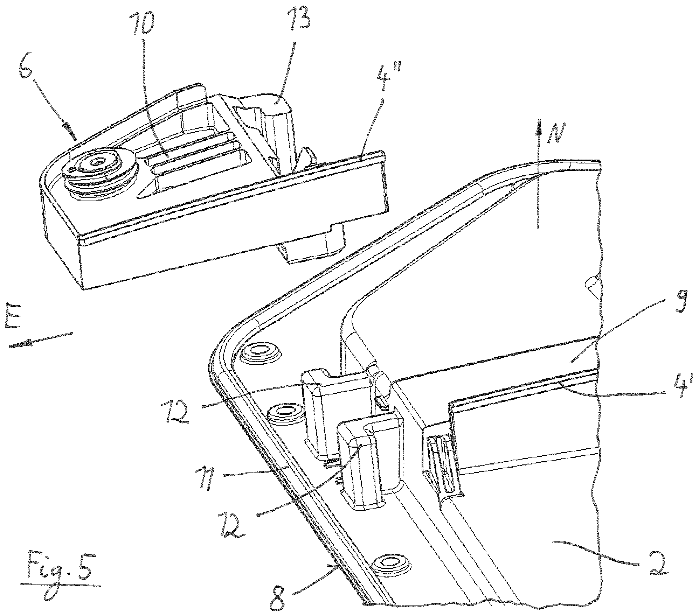

In figure 5 is can be seen how the second section 10 of the unit 3 is arranged to the first section 9 of the unit 3 by means of form-fit elements: Two second hooks 13 are arranged at the second section 10 of the unit 3 which are engaged with two first hooks 12 which are arranged at the first section 9 of the unit 3 or at the carrier element 2.

As can be seen from figures 4 and 5 the guide rail 4 is partly formed by the first section 9 of the unit 3, i. e. a first part 4' of the guide rail 4 is part of the first section 9. Another part of the guide rail 4 is formed by the second section 10 of the unit 3, i. e. a second part 4" of the guide rail 4 is part of the second section 10.

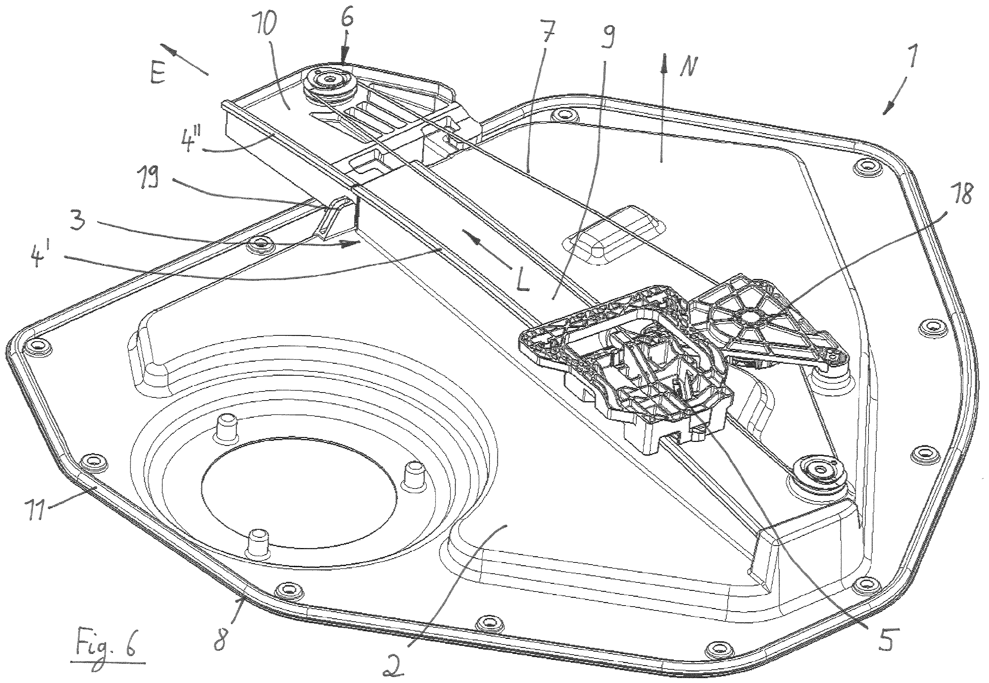

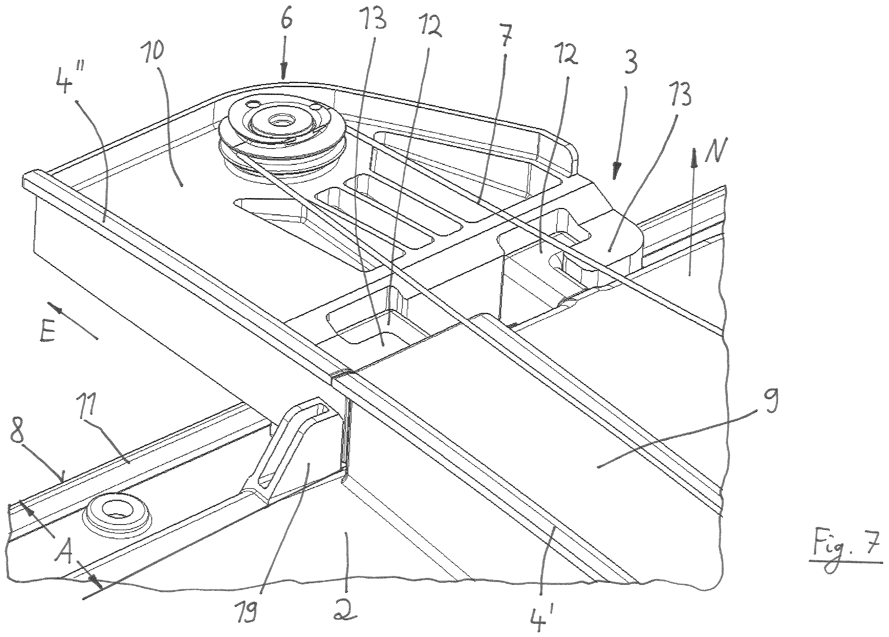

This design, i. e. the creation of the guide rail 4 by first and second parts 4', 4", is also shown in figures 6, 7 and 8. It can also be seen in detail here, that a stop 19 is arranged or formed on the carrier element 2 which allows a precise alignment of the second section 10 relatively to the first section 9 and the carrier element 2 respectively.

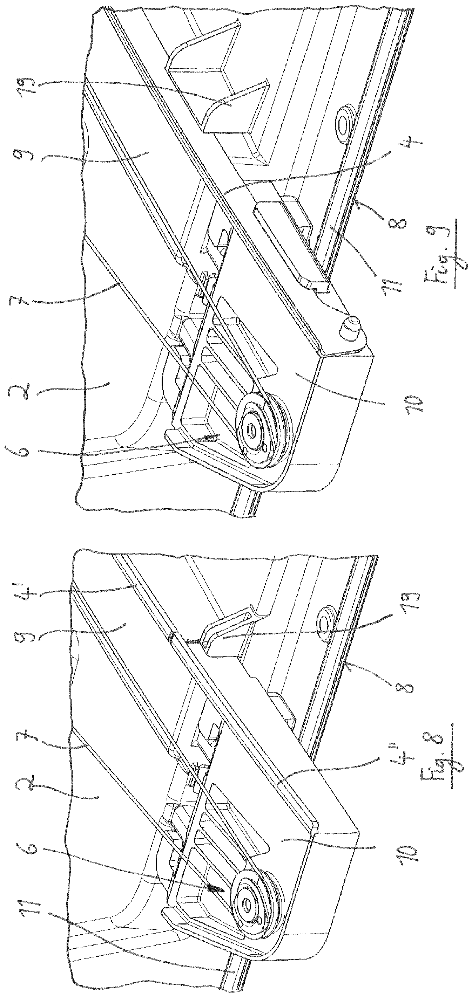

In figure 9 an alternative embodiment is shown with respect to the guide rail 4: Here, a one-part guide rail 4 is mounted when the second section 10 is assembled. In this embodiment the guide rail 4 is fixed to the first section 9 and to the second section 10 by a screw or rivet connection.

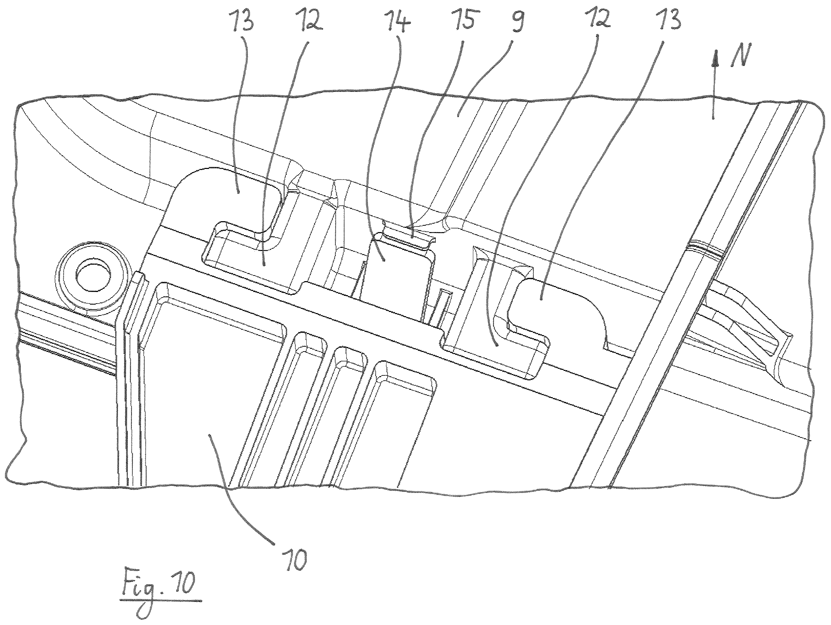

Figures 10, 11 and 12 show details with respect to the fixation of the second section 10 at the first section 9 and the carrier element 2 respectively.

In figure 10 a snap-fit connection is used. An elastic flap 14 is formed at the second section 10 of the unit 3. At the first section 9 a protrusion is formed.

During assembly, the second section 10 is pushed downwards in the normal direction N so that the hooks 12 and 13 come into engagement. By pressing the second section 10 downwards the upper end of the elastic flap 14 comes below the protrusion 15 snaps in place so that a firm connection between the first section 9 and second section 10 is established.

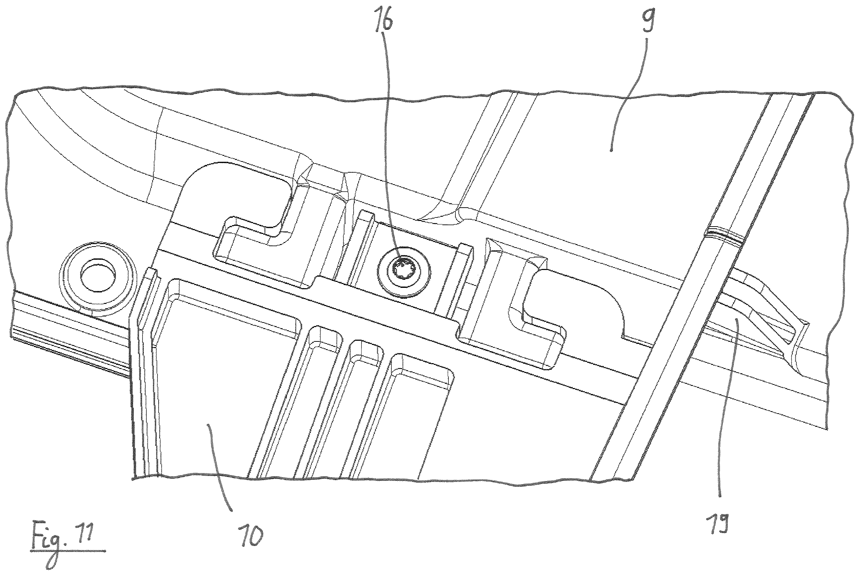

Figure 11 shows an embodiment in which a screw 16 is employed to connect the second section 10 with the first section 9.

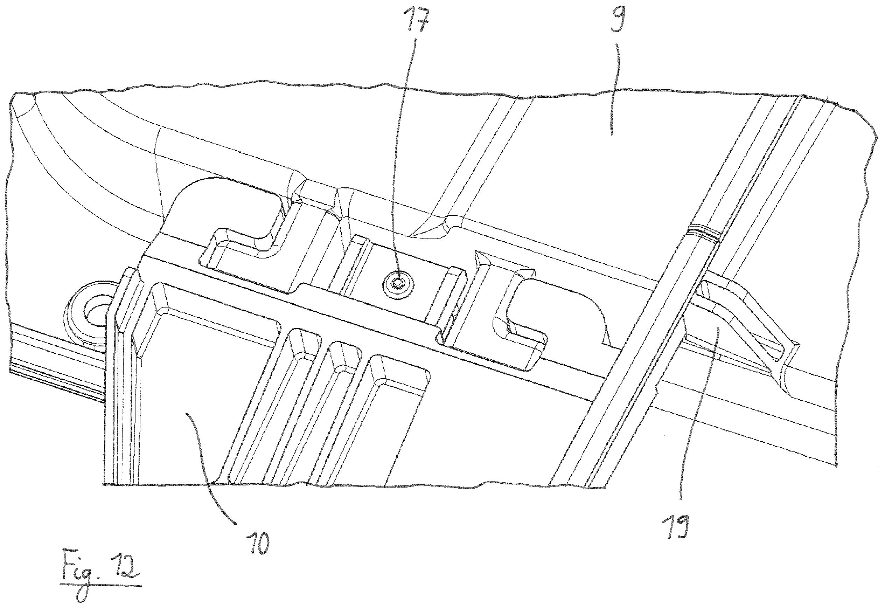

In the embodiment according figure 12, a rivet 17 is used for this purpose.

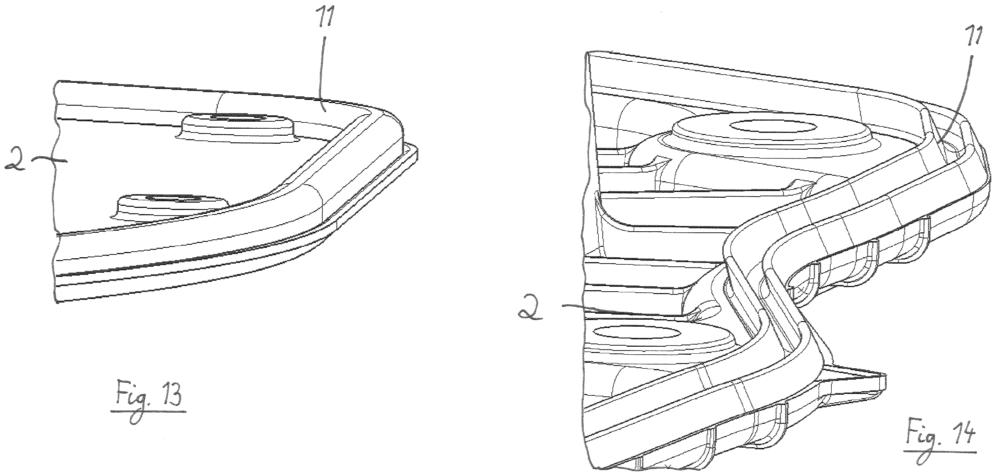

In figures 13 and 14, two different kinds of seals 11 are depicted. Figure 13 shows a FIPG seal (Formed-In-Place-Gasket), figure 14 shows a 2K over-molded seal (two-component over-molded seal).

### List of References:

- 1: Window regulator assembly
- 2: Carrier element (module plate)
- 3: Unit
- 4: Guide rail
- 4': First part of the guide rail
- 4": Second part of the guide rail
- 5: Slider
- 6: Pulley arrangement
- 7: Cable
- 8: Edge region of the carrier element
- 9: First section of the unit
- 10: Second section of the unit
- 11: Seal
- 11': FIPG seal
- 11": Separate seal
- 12, 13: Form-fit elements
- 12: First hook
- 13: Second hook
- 14: Elastic flap
- 15: Protrusion
- 16: Screw
- 17: Rivet
- 18: Drive unit
- 19: Stop
- N: Normal direction
- L: Longitudinal axis
- E: Direction perpendicular to the normal direction
- A: Distance

## Claims

1. Window regulator assembly (1) of a vehicle, wherein the window regulator assembly comprises a carrier element (2), wherein the carrier element (2) has a substantial plate-shaped design with a normal direction (N), wherein at least one unit (3) is arranged on the carrier element (2), wherein the unit (3) comprises a guide rail (4), a slider (5) which is movably arranged at the guide rail (4) along a longitudinal axis (L) and at least one pulley arrangement (6) for redirecting a cable (7), wherein the carrier element (2) has an edge region (8) and wherein a part of the unit (3) extends beyond the carrier element (2) in a direction (E) perpendicular to the normal direction (N),
**characterized in**
**that** the unit (3) comprises a first section (9) which does not extend beyond the carrier element (2) in the direction (E) perpendicular to the normal direction (N) and comprises a second section (10) which extends in the mounted state beyond the carrier element (2) in the direction (E) perpendicular to the normal direction (N), wherein the second section (10) is detachably arranged at the carrier element (2) and/or at the first section (9).

2. Window regulator assembly according to claim 1, **characterized in that** the direction (E) perpendicular to the normal direction (N) is the longitudinal direction (L) in which the guide rail (4) extends.

3. Window regulator assembly according to claims 1 or 2, **characterized in that** the first section (9) of the unit (3) ends with a distance (A) before reaching the edge region (8) of the carrier element (2).

4. Window regulator assembly according to claim 3, **characterized in that** the distance (A) is between 0,5 cm and 15,0 cm, preferably between 1,0 cm and 10,0 cm.

5. Window regulator assembly according to one of claims 1 to 4, **characterized in that** a seal (11) is arranged in the edge region (8) of the carrier element (2) which extends continuously along the whole circumference of the carrier element (2).

6. Window regulator assembly according to claim 5, **characterized in that** the seal (11) is a FIPG seal (Formed-In-Place-Gasket) or a 2K over-molded seal (two-component over-molded seal).

7. Window regulator assembly according to one of claims 1 to 6, **characterized in that** the guide rail (4) is an integrated part of the first section (9) and of the second section (10) of the unit (3), wherein a first part (4') of the guide rail (4) is formed in the first section (9) of the unit (3) and a second part (4") of the guide rail (4) is formed in the second section (10) of the unit (3).

8. Window regulator assembly according to one of claims 1 to 6, **characterized in that** the guide rail (4) is a separate part which is connected to the first section (9) and to the second section (10) of the unit (3).

9. Window regulator assembly according to one of claims 1 to 8, **characterized in that** one single pulley arrangement (6) is arranged on the second section (10) of the unit (3).

10. Window regulator assembly according to one of claims 1 to 9, **characterized in that** form-fit elements (12, 13) are arranged at the first section (9) and at the second section (10) of the unit (3) for the alignment and/or connection of the second section (10) relatively to the first section (9).

11. Window regulator assembly according to claim 10, **characterized in that** form-fit elements (12, 13) comprise first hooks (12) arranged at the first section (9) and second hooks (13) arranged at the second section (10), wherein the first hooks (12) can be brought into engagement with the second hooks (13).

12. Window regulator assembly according to one of claims 1 to 11, **characterized in that** the second section (10) of the unit (3) is connected to the first section (9) of the unit (3) and/or to the carrier element (2) by means of a snap-fit connection.

13. Window regulator assembly according to one of claims 1 to 11, **characterized in that** the second section (10) of the unit (3) is connected to the first section (9) of the unit (3) and/or to the carrier element (2) by means of a screw connection.

14. Window regulator assembly according to one of claims 1 to 11, **characterized in that** the second section (10) of the unit (3) is connected to the first section (9) of the unit (3) and/or to the carrier element (2) by means of a rivet connection.

15. Method for mounting of a window regulator assembly (1) of a vehicle, wherein the window regulator assembly (1) comprises a carrier element (2), wherein the carrier element (2) has a substantial plate-shaped design with a normal direction (N), wherein at least one unit (3) is arranged on the carrier element (2), wherein the unit (3) comprises a guide rail (4), a slider (5) which is movably arranged at the guide rail (4) along a longitudinal axis (L) and at least one pulley arrangement (6) for redirecting a cable (7), wherein the carrier element (2) has an edge region (8), wherein a part of the unit (3) extends beyond the carrier element (2) in a direction (E) perpendicular to the normal direction (N) and wherein a seal (11) is arranged at the circumference of the carrier element (2),
**characterized in**
**that** the unit (3) comprises a first section (9) which does not extend beyond the carrier element (2) in the direction (E) perpendicular to the normal direction (N) and comprises a second section (10) which extends in the mounted state beyond the carrier element (2) in the direction (E) perpendicular to the normal direction (N), wherein the first section (9) and the second section (10) are separate parts, wherein the method comprises the steps:
a) mounting of the first section (9) on the carrier element (2) or forming the first section (9) on the carrier element (2);
b) mounting or applying the seal (11) at the circumference of the carrier element (2);
c) mounting of the second section (10) on the carrier element (2) and/or on the first section (9).
